# EUROPÄISCHE PATENTANMELDUNG

(11) **EP 1 686 290 A1**
(43) Veröffentlichungstag der Anmeldung: **02.08.2006**
(21) Anmeldenummer: 05026333.4
(22) Anmeldetag: 02.12.2005
(51) Int. Cl.: F16H 57/08, F16H 3/44, F16C 35/02

(54) **Planetengetriebe mit Anlaufscheibe für einen Planeten**

(30) Priorität: 01.02.2005 DE 102005004488
(71) Anmelder: ZF FRIEDRICHSHAFEN AG, 88038 Friedrichshafen (DE)
(72) Erfinder: Müller, Josef, 88682 Salem (DE); Muro, Giuseppe, 88048 Friedrichshafen (DE)

(57) **Zusammenfassung**

Ein Planetengetriebe (1), bei dem ein inneres Zentralrad mit mindestens einem Planetenrad (2) kämmt, und das Planetenrad (2) seinerseits mit einem Hohlrad in kämmender Verbindung steht, wobei jedes Planetenrad (2) auf einem Planetenbolzen (6) gelagert ist, der sich auf einem Planetenträger (8) abstützt, und mit mindestens einer, dem Planetenrad (2) zugeodneten Anlaufscheibe (10), die zwischen dem Planetenrad (2) und dem Planetenträger (8) angeordnet ist, weist eine Verdrehsicherung an der Anlaufscheibe (10) in Form von mindestens einem Noppen/Stollen (12) auf, der in entsprechende Vertiefungen/Erhöhungen (14) im Planetenträger (8) eingreift.

## Beschreibung

Die Erfindung betrifft ein Planetengetriebe nach der im Oberbegriff von Anspruch 1 näher definierten Art.

Planetengetriebe werden häufig als Reduktionsgetriebe oder Schaltgetriebe zum Schalten verschiedener Übersetzungen verwendet, die einen Antrieb oder Abtrieb bilden können, je nachdem, weiches Teil des Planetengetriebes drehfest gehalten ist. Um bei sehr hohen Drehmomenten das Planetengetriebe mit großer Übersetzung ausführen zu können, wird das Planetenrad über eine Lagerung auf einem Planetenbolzen, welcher sich an jedem Ende im Planetenträger abstützt, gelagert. Der Planetenträger ist hierfür zweischnittig ausgebildet. Um die Axialkräfte der Planetenräder aufnehmen zu können, die beispielsweise durch eine Schrägverzahnung des Planetengetriebes entstehen, wird zwischen dem Planetenrad und dem Planetenträger eine Anlaufscheibe angeordnet. Weitere Funktionen der Anlaufscheibe sind die Dämpfung von Schwingungen sowie die Zuführung von Schmieröl zu Lagern der Planetenräder durch Aussparungen in den Anlaufscheiben. Um diese Funktionen zu gewährleisten, müssen die Anlaufscheiben gegen Verdrehung gesichert werden, so dass eine Relativbewegung gegenüber den Planetenträgern verhindert wird. Eine Relativbewegung findet somit ausschließlich zwischen den Planetenrädern und den Anlaufscheiben statt. Diese Verdrehsicherung kann durch Zapfen an den Anlaufscheiben erreicht werden, die in entsprechende Bohrungen der Planetenträger eingreifen. Hierfür müssen die Anlaufscheiben in die Planetenträger eingesetzt werden, bevor die Planetenräder montiert werden.

Weiterhin ist aus dem Stand der Technik bekannt, die Sicherung von Anlaufscheiben durch Werkstoffanhäufungen, wie beispielsweise Verdrehzapfen, darzustellen. Weiterhin können mehrere Anlaufscheiben miteinander verbunden werden, wodurch die relative Belastung reduziert wird, und somit die Anlaufscheiben durch gegenseitiges Abstützen gegen Verdrehen gesichert werden. Um die Lebensdauer von Anlaufscheiben zu erhöhen, können Vertiefungen oder Segmentierungen in den Anlaufscheiben vorgesehen werden.

Aus der DE 199 54 636 A1 ist beispielsweise ein derartiges Planetengetriebe bekannt, das eine Anlaufscheibe aufweist, die den Axialschub eines Planetenrades aufnimmt und im elastischen Bereich so weit verformbar ist, dass die Lagerung des Planetenrades auch unter Verformung des Planetenträgers gleichmäßig belastet wird und Schwingungen im Planetengetriebe gedämpft werden.

Die aus dem Stand der Technik bekannten Anlaufscheiben in Planetengetrieben müssen aufgrund der hohen Belastungen, wie sie in Planetengetrieben häufig auftreten, sehr aufwendig gesichert werden. Dies erfordert einen hohen Bearbeitungsaufwand des Planetenträgers sowie spezielle Ausführungsformen der Anlaufscheiben. Dies führt unter anderem zu hohen Kosten in der Fertigung sowie zu komplizierten Montageprozessen, die nicht vollautomatisierbar sind.

Der vorliegenden Erfindung liegt die Aufgabe zugrunde, ein Planetengetriebe darzustellen, bei dem einfache und damit kostengünstige Anlaufscheiben eingesetzt werden können, die eine einfache, schnelle und automatisierbare Montage ermöglichen und keine aufwendige Sicherung der Anlaufscheiben in Planetenträgern erfordern, wodurch der Bearbeitungsaufwand des Planetenträgers reduziert wird.

Die der Erfindung zugrunde liegende Aufgabe wird durch ein, auch die kennzeichnenden Merkmale des Hauptanspruch aufweisendes, gattungsgemäßes Planetengetriebe gelöst.

Ein erfindungsgemäßes Planetengetriebe weist Anlaufscheiben auf, die jeweils mindestens einen Noppen/Stöllen aufweisen, die in entsprechende Vertiefungen der Planetenträger eingreifen. Die Anlaufscheiben weisen eine frei wählbare geometrische Form auf, die so ausgestaltet ist, dass sowohl eine stellungs- und richtungsgebundene Montage als auch eine radiale Zuführung der Anlaufscheiben bei der Montage erforderlich ist. Eine Fehlmontage der Anlaufscheibe ist in beiden Richtungen ausgeschlossen, da die Noppen/Stollen entweder auf einer Fläche des Planetenträgers aufliegen oder in Richtung Planetenrad ragen, wodurch die Montage des Planetenrades nicht mehr möglich ist. Im Bereich der Noppen/Stollen sind die Anlaufscheiben zwischen den Planetenrädern und den Augen der Planetenträger eingespannt, wodurch Biegeverformungen und Biegespannungen in den Anlaufscheiben wirksam verhindert werden. Die Noppen/Stollen der Anlaufscheiben müssen Kräfte aufnehmen, um ein Mitdrehen der Anlaufscheiben zu verhindern. Diese Kräfte verursachen zum einen örtliche Pressungen an den Flanken der Noppen und zum anderen Schub- und Biegespannungen in den Noppen. Die erfindungsgemäßen Planetengetriebe können automatisiert nach radialer Zuführung montiert werden. Die Anlaufscheibe kann zusammen mit dem Planetenrad und dem Planetenradlager automatisiert montiert werden, bei gleichzeitiger Absicherung gegen fehlerhafte Montage.

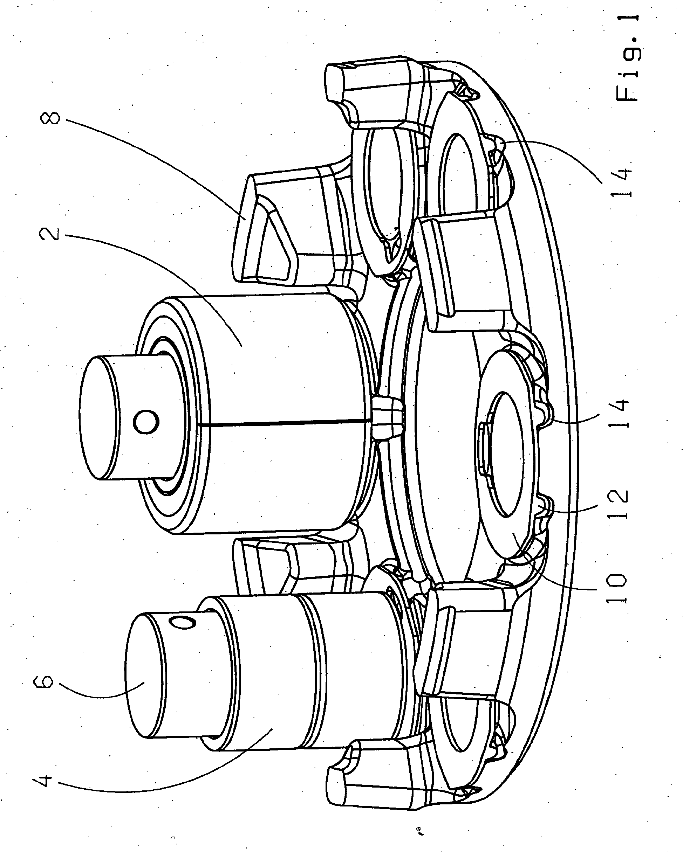

Nachfolgend wird die Erfindung anhand eines in der Figur dargestellten Ausführungsbeispiels eines erfindungsgemäßen Planetengetriebes näher erläutert.

Die einzige Figur zeigt die für die Erfindung wesentlichen Teile eines erfindungsgemäßen Planetengetriebes 1. Ein nicht dargestelltes inneres Zentralrad steht in kämmender Verbindung mit einem Planetenrad 2, welches in kämmender Verbindung mit einem nicht dargestellten Hohlrad steht. Das Planetenrad 2 ist über ein Lager 4 auf einem Planetenbolzen 6 gelagert, der an jedem Ende in einem Planetenträger 8 gehalten ist. Zwischen dem Planetenrad 2 und dem Planetenträger 8 ist eine Anlaufscheibe 10 angeordnet. Die Anlaufscheibe 10 weist Noppen/Stollen 12 auf, die in zugehörige Vertiefungen 14 des Planetenträgers 8 eingreifen.

### Bezugszeichen

- 1: Planetengetriebe
- 2: Planetenrad
- 4: Lager
- 6: Planetenbolzen
- 8: Planetenträger
- 10: Anlaufscheibe
- 12: Noppen/Stollen
- 14: Vertiefungen/Erhöhungen

## Patentansprüche

1. Planetengetriebe (1), bei dem ein inneres Zentralrad mit mindestens einem Planetenrad (2) kämmt, und das Planetenrad (2) seinerseits mit einem Hohlrad in kämmender Verbindung steht, wobei jedes Planetenrad (2) auf einem Planetenbolzen (6) gelagert ist, der sich auf einem Planetenträger (8) abstützt, und mit mindestens einer, dem Planetenrad (2) zugeodneten Anlaufscheibe (10), die zwischen dem Planetenrad (2) und dem Planetenträger (8) angeordnet ist, **dadurch gekennzeichnet , dass** die Anlaufscheibe (10) eine Verdrehsicherung in Form von mindestens einem Noppen/Stollen (12) aufweist, die in entsprechende Vertiefungen/Erhöhungen (14) im Planetenträger (8) eingreift, und die Verdrehsicherung so ausgeführt ist, dass eine radiale Montage der Anlaufscheibe (10) möglich ist.
